(19) **Europäisches Patentamt European Patent Office Office européen des brevets**

(11) **EP 3 948 654 B1**

(12) **FASCICULE DE BREVET EUROPEEN**

(45) Date de publication et mention de la délivrance du brevet:
**27.05.2026 Bulletin 2026/22**

(21) Numéro de dépôt: **20714626.7**

(22) Date de dépôt: **01.04.2020**

(51) Classification Internationale des Brevets (IPC):
**G06V 10/40** *(2022.01)* **G06V 20/64** *(2022.01)*

(52) Classification Coopérative des Brevets (CPC):
**G06V 20/653; G06V 10/40**

(86) Numéro de dépôt international:
**PCT/EP2020/059323**

(87) Numéro de publication internationale:
**WO 2020/201392 (08.10.2020 Gazette 2020/41)**

(54) **PROCÉDÉ, PROGRAMME D'ORDINATEUR ET SYSTÈME POUR L'IDENTIFICATION D'UNE INSTANCE D'OBJET DANS UNE SCÈNE TRIDIMENSIONNELLE**

VERFAHREN, COMPUTERPROGRAMM UND SYSTEM ZUR IDENTIFIZIERUNG EINER OBJEKTINSTANZ IN EINER DREIDIMENSIONALEN SZENE

METHOD, COMPUTER PROGRAM AND SYSTEM FOR IDENTIFYING AN OBJECT INSTANCE IN A THREE-DIMENSIONAL SCENE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.04.2019 FR 1903633**

(43) Date de publication de la demande:
**09.02.2022 Bulletin 2022/06**

(73) Titulaire: **Commissariat à l'Energie Atomique et aux Energies Alternatives
75015 Paris (FR)**

(72) Inventeurs:
• **MAYRAN DE CHAMISSO, Fabrice
77140 Nemours (FR)**
• **TAMAAZOUSTI, Mohamed
92140 Clamart (FR)**
• **MEDEN, Boris
92140 Clamart (FR)**

(74) Mandataire: **Bonnet, Michel et al
Cabinet Bonnet
93, rue Réaumur
75002 Paris (FR)**

(56) Documents cités:
• CHUA C S ET AL: "POINT SIGNATURES: A NEW REPRESENTATION FOR 3D OBJECT RECOGNITION", INTERNATIONAL JOURNAL OF COMPUTER VISION, KLUWER ACADEMIC PUBLISHERS, NORWELL, US, vol. 25, no. 1, 1 October 1997 (1997-10-01), pages 63 - 85, XP000723755, ISSN: 0920-5691, DOI: 10.1023/ A:1007981719186

**Description**

La présente invention concerne un procédé d'identification d'une instance d'un objet dans des données de représentation d'une scène tridimensionnelle à l'aide d'un descripteur. Elle concerne également un programme d'ordinateur et un système correspondants.

D'une façon générale, elle s'inscrit dans le domaine industriel de la reconnaissance d'objets rigides ou quasi-rigides (i.e. non articulés) en vision tridimensionnelle par ordinateur. Une telle reconnaissance d'objets nécessite une comparaison des données de représentation de la scène tridimensionnelle avec celles d'au moins un modèle d'objet rigide ou quasi-rigide, ou avec celles d'une autre scène tridimensionnelle, par exemple pour une détection et localisation d'objet par recalage. Ce traitement implique la détermination d'au moins un jeu de paramètres de transformation spatiale en translation et rotation pour la mise en correspondance d'au moins une instance d'objet dans la scène tridimensionnelle avec le modèle d'objet correspondant, ou avec une autre instance d'objet correspondante dans l'autre scène tridimensionnelle.

Par « modèle d'objet » dans ce contexte tridimensionnel, on entend une représentation prédéterminée d'un objet faisant référence. Elle peut consister en une représentation modélisée, par exemple par ordinateur, en trois dimensions spatiales d'un objet réel sous forme de nuage tridimensionnel de points, d'ensemble maillé de faces (de l'anglais « mesh ») ou de toute autre représentation mathématique (explicite, implicite, paramétrique, etc.) pouvant être convertie en un nuage tridimensionnel de points. Elle peut aussi être issue d'une capture de scène réelle, à l'aide d'un ou plusieurs capteurs, dans laquelle la représentation de l'objet en nuage tridimensionnel de points et sa disposition sont suffisamment contrôlées pour faire référence. Par « instance d'objet » dans une scène tridimensionnelle, on entend une représentation comparable d'un objet dans cette scène tridimensionnelle, c'est-à-dire une représentation modélisée sous forme de nuage tridimensionnel de points, d'ensemble maillé de faces ou de toute autre représentation mathématique pouvant être convertie en un nuage tridimensionnel de points.

Les applications industrielles concrètes sont multiples et dépassent la détection et la localisation d'objets. Elles incluent de façon non exhaustive :

- la localisation tridimensionnelle, par exemple en réalité virtuelle, augmentée ou mixte, d'un système tel qu'un véhicule, notamment un véhicule autonome, un piéton, un robot ou un dispositif portatif, par des techniques de cartographie et localisation simultanées (de l'anglais « Simultaneous Localization And Mapping »),

- la reconstitution tridimensionnelle d'une scène par fusion de données à partir d'observations partielles complémentaires,

- le recalage d'un modèle dans une scène,

- la classification d'objets présents dans une scène,

- la reconstitution tridimensionnelle de scène par recalage tridimensionnel d'une scène sur une autre, l'une de ces deux scènes faisant référence,

- l'analyse d'une scène tridimensionnelle incluant une reconnaissance et une localisation d'objets dans cette scène,

- l'identification de points d'intérêts dans une scène (par exemple des points présentant une courbure particulière),

- la segmentation de surfaces dans une scène selon un critère de similarité,

- l'inspection automatique en temps réel d'objets fabriqués industriellement, en particulier pour une recherche de défauts,

- la préhension robotique et la manipulation robotisée d'objets dans l'espace, à l'aide notamment d'au moins un bras articulé industriel et/ou dans une chaîne d'assemblage par exemple.

La dernière application inclut notamment le dévracage (de l'anglais « bin picking ») consistant à reconnaître puis déplacer successivement ou simultanément, à l'aide d'un ou plusieurs bras de robots, des objets en vrac dans une chaîne de production ou dans un lieu de stockage.

Le principe de la reconnaissance et de la localisation d'objet par recalage rigide sur un modèle, ou par comparaison de données de représentations de scènes, est très étudié dans l'état de la technique. Selon une chaîne de traitement bien établie et enseignée par exemple dans le document de brevet US 8,830,229 B2, il comporte les étapes suivantes :

- obtention de jeux de paramètres de transformation en translation et rotation pour des mises en correspondance tridimensionnelle respectives de points particuliers de chaque instance supposée d'un objet dans la scène tridimensionnelle avec leurs dispositions dans un modèle tridimensionnel correspondant ou dans une autre instance d'objet correspondante dans une autre scène tridimensionnelle,

- à partir de ces jeux de paramètres point à point et si au moins une instance d'objet est effectivement présente dans la scène tridimensionnelle, détermination d'au moins un jeu de paramètres de transformation en translation et rotation pour la mise en correspondance tridimensionnelle d'au moins une instance d'objet de la scène tridimensionnelle avec au moins un modèle d'objet tridimensionnel ou au moins une autre instance d'objet d'une autre scène tridimensionnelle, et

- de façon optionnelle, vérification de la ou des transformations déterminées.

En ce qui concerne les deuxième et troisième étapes, elles font l'objet de nombreuses recherches et propositions de solutions dans l'état de la technique. Mais le détail de ces deux étapes ne fait pas l'objet principal de la présente invention.

En ce qui concerne la première étape, elle consiste généralement à prétraiter les données de représentation de la scène tridimensionnelle obtenues par un ou plusieurs capteurs, à sélectionner des points particuliers d'intérêt à mettre en correspondance dans la scène et dans le modèle ou dans l'autre scène, à calculer les valeurs prises par des descripteurs locaux ou globaux destinés à être associés à ces points particuliers sélectionnés pour faciliter et améliorer la mise en correspondance, puis à réaliser la mise en correspondance proprement dite. Cette première étape peut d'ailleurs être mise en oeuvre dans des applications plus générales que la détection, la reconnaissance ou la localisation d'objet par recalage.

Mais en particulier, dans l'application précitée de reconnaissance et de localisation d'objet, le choix des descripteurs ainsi que la façon de les évaluer et de les comparer sont très déterminants sur la pertinence des paramètres de transformation obtenus et le succès de la mise en correspondance. D'une façon plus générale et au-delà de l'application précitée, ils ont également un impact majeur sur la complexité et le temps de traitement des données. La qualité d'un descripteur est par ailleurs un critère d'autant plus important qu'il peut aussi être souhaité de l'utiliser pour la sélection elle-même des points d'intérêt sachant que ces points d'intérêt sont avantageusement ceux possédant des valeurs de descripteur facilement reconnaissables et/ou très discriminantes.

Les solutions proposées souffrent généralement de limitations, soit en termes de capacité à discriminer des points différents d'une même instance d'objet ou d'instances d'objets différentes dans une même scène, c'est-à-dire la capacité à fournir des valeurs suffisamment différentes en des points différents pour les distinguer, soit en termes de complexité des calculs à réaliser et donc de temps de calcul.

Par exemple, le descripteur défini et utilisé dans le brevet US 8,830,229 B2 précité est appliqué sur chaque paire de points d'un ensemble de points représentatifs sélectionnés de la surface d'une instance d'objet. Cette façon de procéder présente d'emblée un défaut difficile à surmonter : elle choisit heuristiquement des paires de points, ce qui est par nature coûteux en temps de calcul. De plus, les dimensions exprimées en distances et angles de ce descripteur ne sont pas homogènes et donc difficiles à indexer dans une structure de recherche.

Plus généralement, les différents descripteurs de l'état de l'art présentent des forces et faiblesses équivalentes. En cherchant à obtenir des descripteurs de plus en plus discriminants et en se focalisant sur leur robustesse, l'homme du métier les a rendus de plus en plus complexes en utilisant notamment des approches à base de statistiques incluant des calculs d'histogrammes, signatures et moments de distributions. Ces calculs sont lents, difficile à interpréter concrètement, en couvrant de façon sous-optimale l'espace des valeurs que peuvent prendre les descripteurs.

Une étude comparative à ce sujet est présentée dans l'article de Guo et al, intitulé « 3D object recognition in cluttered scenes with local surface features: a survey », publié dans IEEE Transactions on Pattern Analysis and Machine Intelligence, volume 36, n° 11, pages 2270 à 2287 (novembre 2014). Parmi les descripteurs identifiés dans cette étude, un descripteur imaginé par les mêmes auteurs et appelé RoPS (de l'anglais « Rotational Projection Statistics ») implique la sélection de points représentatifs d'une surface d'instance d'objet dans des données de représentation d'une scène tridimensionnelle, la détermination d'un repère local tridimensionnel en chaque point représentatif sélectionné et le calcul d'une pluralité de valeurs identifiantes prises par le descripteur dans le repère local déterminé pour chaque point représentatif sélectionné. Le descripteur prend plus précisément la forme d'un paramètre multivalué, c'est-à-dire multidimensionnel, résultant de projections sur différents plans définis dans le repère local pour la fourniture de moments d'histogrammes exprimés dans 135 dimensions. En cela il s'agit d'un descripteur volumique de très grande complexité. Il présente des propriétés intéressantes et est, selon ses auteurs, très discriminant et robuste au bruit, mais au prix de calculs lents à exécuter et de valeurs résultantes lentes à comparer. De plus, le nombre élevé de dimensions réduit la robustesse au bruit et rend le descripteur surdimensionné par rapport à la plupart des applications concrètes. Des souséchantillonnages des données d'entrée et/ou de l'ensemble des valeurs calculées du descripteur doivent alors être envisagés mais ils réduisent significativement les performances parce que l'heuristique utilisée pour sous-échantillonner est toujours imparfaite. Par ailleurs, ce descripteur n'est pas adapté à une comparaison de ses valeurs par calculs de distances euclidiennes généralement exploitée dans les méthodes de recherches rapides connues.

Un autre descripteur, défini dans le document de brevet US 8,274,508 B2, présente lui aussi des propriétés intéressantes. Comme le précédent, il implique la sélection de points représentatifs d'une surface d'instance d'objet dans des données de représentation d'une scène tridimensionnelle, la détermination d'un repère local tridimensionnel en chaque point représentatif sélectionné et le calcul d'une pluralité de valeurs identifiantes prises par le descripteur dans le repère local déterminé pour chaque point représentatif sélectionné. Il est cependant défini sur un nombre bien plus réduit de dimensions et se limite à des calculs surfaciques de bien moindre complexité. Il prend plus précisément la forme d'un paramètre multivalué résultant de calculs d'élévations, par rapport à la surface de l'instance d'objet considérée, de zones concentriques situées dans un plan tangent transposé localement en chaque point représentatif sélectionné. Mais il implique lui aussi des calculs statistiques rendant ses valeurs lentes à calculer. Il implique en outre des recherches de plus proches voisins ajoutant à la complexité des calculs, avec une augmentation proportionnelle au carré de la taille du descripteur en moyenne. Par ailleurs, les calculs d'élévations posent problème dans les zones de fortes courbures de l'instance d'objet considérée ainsi que sur ses bords.

CHUA C S ET AL: "POINT SIGNATURES: A NEW REPRESENTATION FOR 3D OBJECT RECOGNITION", INTERNATIONAL JOURNAL OF COMPUTER VISION, KLUWER ACADEMIC PUBLISHERS, NORWELL, US, vol. 25, no. 1, 1 octobre 1997 (1997-10-01), pages 63-85, ISSN: 0920-5691, DOI: 10.1023/A:1007981719186 propose une nouvelle forme de représentation ponctuelle pour décrire les surfaces de forme libre en 3D. Cette représentation, appelée "the point signature" (signatures de points), permet de décrire le voisinage structurel d'un point de manière plus complète que la simple utilisation des coordonnées 3D du point. Invariante par rotation et translation, "the point signature" peut être utilisée directement pour émettre l'hypothèse d'une correspondance avec des points modèles ayant des signatures similaires. La reconnaissance s'effectue en faisant correspondre les signatures des points de données représentant la surface détectée aux signatures des points de données représentant la surface du modèle. L'utilisation des signatures de points ne se limite pas à la reconnaissance d'une scène à objet unique dans une petite bibliothèque de modèles. Elle peut être étendue naturellement à la reconnaissance de scènes contenant plusieurs objets se chevauchant partiellement (qui peuvent également être juxtaposés les uns aux autres) par rapport à une grande bibliothèque de modèles.

Il peut ainsi être souhaité de prévoir un procédé d'identification d'une instance d'un objet dans des données de représentation d'une scène tridimensionnelle à l'aide d'un descripteur qui permette de s'affranchir d'au moins une partie des problèmes et contraintes précités.

Il est donc proposé un procédé d'identification d'une instance d'un objet dans des données de représentation d'une scène tridimensionnelle à l'aide d'un descripteur, comportant les étapes suivantes :

- sélection d'au moins un point représentatif d'une surface de l'instance d'objet dans les données de représentation ;

- détermination d'un repère local en chaque point représentatif sélectionné ;

- calcul d'une pluralité de valeurs identifiantes prises par le descripteur dans le repère local déterminé pour chaque point représentatif sélectionné ; caractérisé en ce que :

- le descripteur est défini au moins en partie par un ensemble de points aux coordonnées prédéterminées transposables dans chaque repère local déterminé ; et

- le calcul de la pluralité de valeurs identifiantes comporte, pour chaque point représentatif sélectionné et chaque point du descripteur, l'estimation d'au moins une valeur de distance la plus proche entre ce point du descripteur transposé dans le repère local déterminé du point représentatif sélectionné et la surface de l'instance d'objet.

Ainsi, grâce à une telle définition du descripteur sur la base de distances les plus proches entre différents points d'un ensemble prédéterminé et la surface de l'instance d'objet, on obtient une identification surfacique simple, discriminante et robuste. N'impliquant pas nécessairement de calculs statistiques, ce descripteur est en outre tout à fait adapté à une comparaison de ses valeurs par calculs de distances euclidiennes et aux méthodes de recherches rapides connues. L'expérience montre également qu'un nombre limité de points, largement inférieur aux 135 dimensions du descripteur RoPS, suffit pour l'obtention de bonnes performances. Par ailleurs, les calculs de distances posent moins de problèmes que les calculs d'élévations dans les zones de fortes courbures de l'instance d'objet considérée.

De façon optionnelle :

- chaque point représentatif sélectionné est un point de la surface de l'instance d'objet ;

- l'ensemble des points du descripteur forme un polygone, par exemple un hexagone ; et

- pour chaque point représentatif sélectionné, le polygone est transposé dans un plan localement tangent à la surface de l'instance d'objet au point représentatif sélectionné.

De façon optionnelle également, l'ensemble des points du descripteur forme un polygone régulier transposable avec une adaptation possible du rayon de son cercle circonscrit à un paramètre de courbure locale de la surface de l'instance d'objet en chaque point représentatif sélectionné.

De façon optionnelle également :

- chaque point représentatif sélectionné est un point d'un axe ou d'une courbe principal(e) de l'instance d'objet ;

- l'ensemble des points du descripteur forme un polygone, par exemple un hexagone ; et

- pour chaque point représentatif sélectionné, le polygone est transposé dans un plan localement normal à l'axe ou à la courbe principal(e) de l'instance d'objet et comportant le point représentatif sélectionné.

De façon optionnelle également, ladite au moins une valeur de distance la plus proche estimée est une valeur de distance point à point, une valeur de distance point à plan ou une combinaison de ces valeurs de distances.

De façon optionnelle également, la transposition de l'ensemble de points du descripteur comporte une translation tridimensionnelle, une rotation tridimensionnelle ainsi qu'un changement d'échelle. Ceci permet de transposer l'ensemble des points du descripteur dans un repère local lié au point représentatif considéré dans la scène tridimensionnelle.

De façon optionnelle également, le calcul de la pluralité de valeurs identifiantes comporte en outre un calcul de score de confiance du descripteur en chaque point représentatif sélectionné, ce calcul de score de confiance étant fonction de la pluralité de valeurs identifiantes.

De façon optionnelle également, le descripteur est en outre défini par au moins l'un des éléments de l'ensemble constitué de :

- un paramètre de luminance ;

- un paramètre de chrominance ;

- un paramètre de rugosité ;

- un paramètre de polarité ;

- un paramètre de texture ; et

- un paramètre de pouvoir réfléchissant.

Il est également proposé un programme d'ordinateur téléchargeable depuis un réseau de communication et/ou enregistré sur un support lisible par ordinateur et/ou exécutable par un processeur, caractérisé en ce qu'il comprend des instructions pour l'exécution des étapes d'un procédé d'identification selon l'invention, lorsque ledit programme est exécuté sur un ordinateur.

Il est également proposé un système d'identification d'une instance d'un objet dans des données de représentation d'une scène tridimensionnelle à l'aide d'un descripteur, le système comportant :

- au moins une mémoire de stockage des données de représentation de la scène tridimensionnelle et de coordonnées prédéterminées de l'ensemble de points du descripteur ; et

- un processeur d'identification de l'instance d'objet dans la scène tridimensionnelle, programmé pour l'exécution des étapes d'un procédé d'identification selon l'invention.

L'invention sera mieux comprise à l'aide de la description qui va suivre, donnée uniquement à titre d'exemple et faite en se référant aux dessins annexés dans lesquels :

[Fig.1] la figure 1 représente schématiquement un exemple de représentation numérique en imagerie tridimensionnelle de plusieurs modèles d'objets,

[Fig.2] la figure 2 représente schématiquement un exemple de représentation numérique en imagerie tridimensionnelle d'une scène tridimensionnelle comportant plusieurs instances d'objets,

[Fig.3] la figure 3 représente schématiquement la structure générale d'un système de détection et de localisation tridimensionnelle d'au moins une instance d'objet dans des données de représentation de scène tridimensionnelle telles que celles de la figure 2, incluant un système d'identification d'instance d'objet selon un mode de réalisation de l'invention,

[Fig.4] la figure 4 illustre l'adaptation d'un descripteur selon un mode de réalisation de l'invention en un point représentatif de scène tridimensionnelle, réalisée par le système de la figure 3, et

[Fig.5] la figure 5 illustre les étapes successives d'un procédé de détection et de localisation tridimensionnelle d'au moins une instance d'objet mis en oeuvre par le système de la figure 3, incluant une identification de chaque instance d'objet présente dans la scène tridimensionnelle de la figure 2 et de chaque modèle d'objet de la figure 1, selon un mode de réalisation de l'invention.

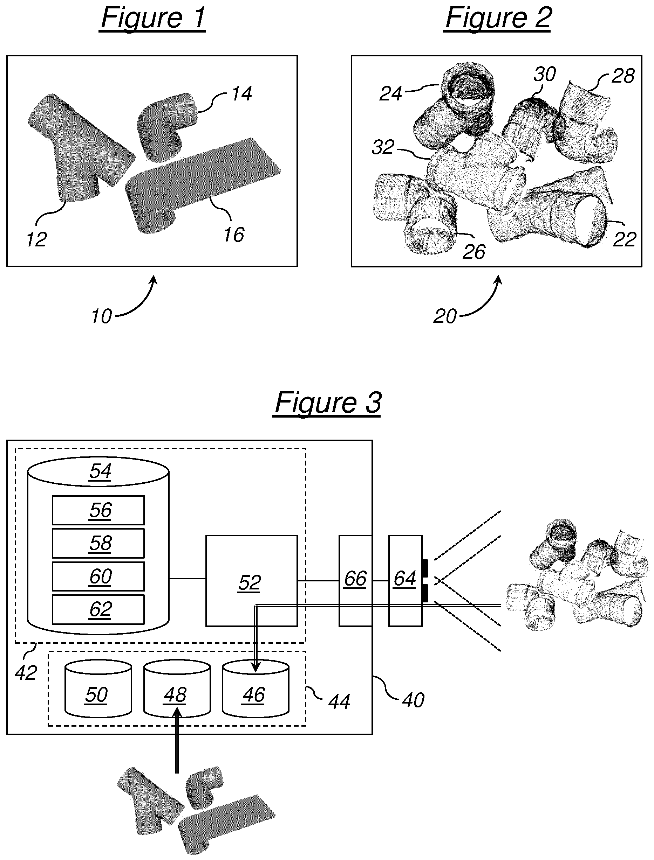

L'ensemble 10 de modèles tridimensionnels représenté sur la figure 1 est une scène artificielle constituée de plusieurs modèles d'objets artificiels. Il pourrait aussi s'agir d'une scène réelle de référence constituée de modèles d'objets réels dont la disposition est connue et maîtrisée. Il est ici constitué de trois modèles d'objets choisis à titre d'exemple illustratif. Un premier modèle tridimensionnel 12 représente un raccord de tuyau en T incliné. Un deuxième modèle tridimensionnel 14 représente un raccord de tuyau en coude. Un troisième modèle tridimensionnel 16 représente un profilé à enroulement de l'une de ses extrémités. Ces trois modèles d'objets sont disposés et parfaitement localisables dans un référentiel tridimensionnel lié à l'ensemble 10. Ils sont représentés comme indiqué précédemment sous forme de nuage tridimensionnel de points, d'ensemble maillé de faces ou de toute autre représentation mathématique pouvant être convertie en un nuage tridimensionnel de points. Pour des raisons de clarté évidentes, les modèles 12, 14 et 16 sont bien séparés les uns des autres dans l'ensemble 10. Mais ils pourraient avantageusement être superposés en étant tous centrés dans l'ensemble 10, tout en restant distinguables à l'aide de labels distinctifs associés aux points qui les constituent. Avantageusement, leur échantillonnage est le même ou au moins similaire. Dans un cas simple, l'ensemble 10 pourrait ne comporter qu'un seul modèle tridimensionnel.

La scène tridimensionnelle 20 représentée sur la figure 2 résulte d'une capture tridimensionnelle obtenue à l'aide d'un capteur 3D d'une scène réelle. Elle est constituée de points tridimensionnels ou « points 3D » d'un référentiel qui lui est propre, indiquant chacun par une information de nuance de gris ou de couleur la présence d'instances réelles d'objets dans la scène réelle. On y distingue ici, à titre d'exemple illustratif deux instances d'objets 22 et 24 correspondant au modèle de raccord de tuyau en T incliné 12, trois instances d'objets 26, 28 et 30 correspondant au modèle de raccord de tuyau en coude 14, une instance d'objet 32 de type raccord de tuyau en T droit n'ayant pas de modèle correspondant dans l'ensemble 10 et aucune instance d'objet correspondant au modèle de profilé 16. On remarquera que certaines instances d'objets de la scène 20 peuvent n'être que partiellement visibles.

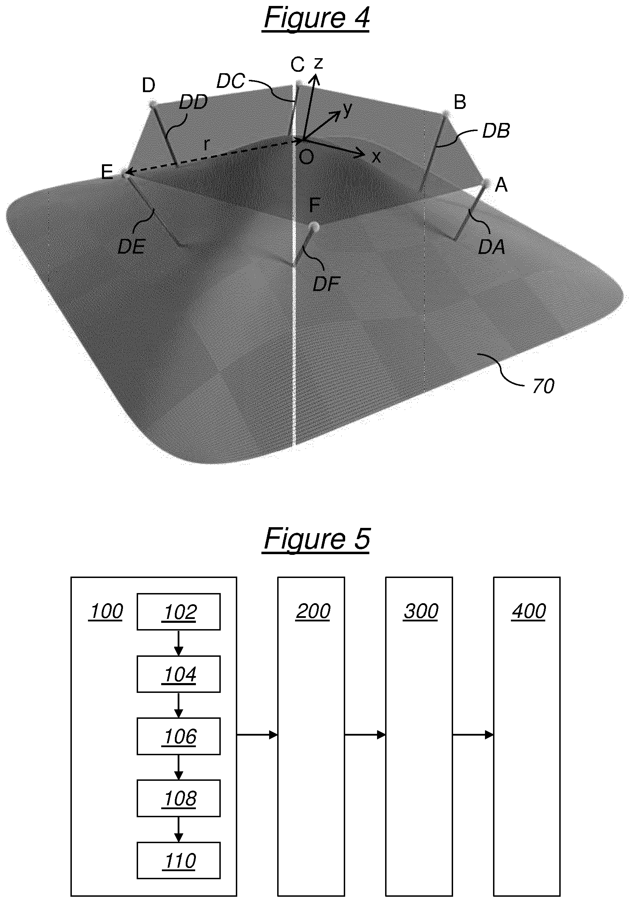

Conformément à un système/procédé de détection et de localisation tridimensionnelle des instances d'objets 22 à 32 dans des données de représentation de la scène tridimensionnelle 20, par comparaison avec les modèles d'objets 12, 14 et 16 dans des données de représentation de l'ensemble 10, tel que celui qui va être détaillé en références aux figures 3 et 5, une correspondance doit pouvoir être établie entre chaque instance d'objet pouvant être identifiée et reconstituée dans la scène tridimensionnelle 20 et l'un des modèles 12, 14 et 16. Cette correspondance consiste à retrouver les paramètres d'une transformation rigide en translation, en rotation, et éventuellement en changement d'échelle (agrandissement ou réduction de taille), qui permet le cas échéant de passer du positionnement de chaque instance d'objet dans la scène 20 vers celui de son modèle dans l'ensemble 10, ou inversement, du positionnement de chaque modèle dans l'ensemble 10 vers celui d'une instance d'objet qui lui correspond dans la scène 20. On rappellera toutefois que l'exemple illustré par les figures 3 et 5 ne concerne qu'une famille particulière d'applications possibles de la présente invention, celle de la détection et la localisation d'objet dans une scène tridimensionnelle, l'invention s'étendant à des applications au-delà de cette famille particulière.

Le système 40 de détection et de localisation tridimensionnelle des instances d'objets 22 à 32, tel que représenté schématiquement sur la figure 3, comporte une unité de traitement 42 associée de façon classique à une mémoire 44 (par exemple une mémoire RAM). Cette mémoire 44 stocke par exemple notamment des données 46 de représentation de la scène 20, des données 48 de représentation de l'ensemble 10 de modèles tridimensionnels et des coordonnées prédéterminées 50 d'un ensemble de points définissant au moins en partie un descripteur.

L'unité de traitement 42 peut être mise en œuvre dans un dispositif informatique tel qu'un ordinateur classique comportant un processeur associé à une ou plusieurs mémoires pour le stockage de fichiers de données et de programmes d'ordinateurs. L'unité de traitement 42 peut alors elle-même être considérée comme formée d'un processeur 52 de mise en correspondance d'instances et de modèles d'objets associé à une mémoire 54 de stockage des instructions qu'il exécute sous forme de programmes d'ordinateurs. Lorsqu'au moins une partie des instructions peut être exécutée en parallèle, le processeur peut être optionnellement adapté pour un tel parallélisme, par exemple sous la forme d'un processeur GPU (de l'anglais « Graphics Processing Unit »).

Parmi ces programmes d'ordinateurs, un premier programme 56 est par exemple conçu pour l'exécution d'un procédé d'identification des instances d'objets de la scène tridimensionnelle 20 à l'aide du descripteur défini au moins en partie par l'ensemble de points aux coordonnées prédéterminées 50 stockées dans la mémoire 44. Cette identification consiste à calculer des valeurs identifiantes que prend le descripteur en plusieurs points particuliers à sélectionner pour chaque instance d'objet considérée. Ce même premier programme 56 permet également une identification similaire des modèles d'objets de l'ensemble 10. C'est son fonctionnement qui fait l'objet principal de la présente invention, par un choix astucieux de descripteur. Ce premier programme 56 associé au processeur 52 dans l'unité de traitement 42 et à la mémoire 44 constitue un système d'identification d'instance d'objet selon la présente invention. Un deuxième programme 58 est par exemple conçu pour l'exécution d'une méthode d'obtention de jeux de paramètres de transformation en translation, rotation et éventuellement changement d'échelle pour des mises en correspondance tridimensionnelle respectives des points particuliers sélectionnés d'instances d'objets dans la scène tridimensionnelle 20 avec leurs dispositions dans l'un des modèles de l'ensemble 10. Une telle méthode est connue et ne sera pas détaillée. Elle est basée sur une mise en correspondance des valeurs que prend le descripteur en ces points dans les deux représentations. Elle fonctionne d'autant mieux que le descripteur est discriminant. Un troisième programme 60 est par exemple conçu pour exécuter une classification automatique, chaque classe éventuellement obtenue en sortie étant représentative d'une unique instance d'objet dans la scène tridimensionnelle 20 et d'un unique jeu de paramètres de transformation pour une mise en correspondance avec un unique modèle dans l'ensemble 10. Une telle classification est également connue et ne sera pas détaillée. Elle peut se faire en une ou plusieurs itérations selon le nombre d'instances d'objets à localiser et la méthode employée. Enfin, un quatrième programme optionnel 62 est par exemple conçu pour exécuter une vérification de la ou des transformations déterminées par classification automatique. Une telle vérification optionnelle est également connue et ne sera pas détaillée.

L'unité de traitement 42 telle qu'illustrée sur la figure 3 comporte ainsi fonctionnellement quatre programmes d'ordinateur ou quatre fonctions d'un même programme d'ordinateur. On notera en effet que les programmes d'ordinateur 56, 58, 60, 62 sont présentés comme distincts, mais cette distinction est purement fonctionnelle. Ils pourraient tout aussi bien être regroupés selon toutes les combinaisons possibles en un ou plusieurs logiciels. Leurs fonctions pourraient aussi être au moins en partie micro programmées ou micro câblées dans des circuits intégrés dédiés. Ainsi, en variante, le dispositif informatique mettant en oeuvre l'unité de traitement 42 pourrait être remplacé par un dispositif électronique composé uniquement de circuits numériques (sans programme d'ordinateur) pour la réalisation des mêmes actions.

L'installation de la figure 3 peut comporter, outre le système 40 de détection et de localisation tridimensionnelle des instances d'objets 22 à 32, un capteur 3D 64 d'obtention des données de représentation de la scène tridimensionnelle 20. Un tel capteur 3D n'est pas détaillé parce qu'il est bien connu de l'homme du métier. Par généralisation, il peut être constitué d'une combinaison de plusieurs capteurs, pour plusieurs vues ou modalités de détection. Selon une variante de réalisation possible, le système 40 de détection et de localisation tridimensionnelle est autonome et distant du capteur 3D 64. Il comporte alors une interface 66 de (télé)communication avec ce capteur 3D 64, avec ou sans fil, gérée par le processeur 52 de mise en correspondance d'instances et de modèles d'objets. Selon une autre variante de réalisation possible, le système 40 pourrait être embarqué dans le capteur 3D 64 ou, réciproquement, le capteur 3D 64 pourrait être intégré dans le système 40.

Un exemple de descripteur conforme aux principes de la présente invention et utilisé par le premier programme 56 va maintenant être détaillé en référence à la figure 4. Cet exemple est simple et non limitatif. Il illustre un exemple de descripteur local.

Selon un premier principe général, ce descripteur est défini au moins en partie par un ensemble de points aux coordonnées prédéterminées dans un repère tridimensionnel propre au descripteur. Selon l'exemple simplifié de la figure 4, le descripteur comporte par exemple six points coplanaires formant un hexagone régulier. Il en résulte un descripteur pouvant se réduire à six dimensions ce qui le rend très simple à utiliser parce que les calculs de valeurs et comparaisons sont rapides au vu du nombre réduit de dimensions.

Selon un deuxième principe général, le repère tridimensionnel propre au descripteur et les coordonnées de chacun de ses points sont transposables dans chaque repère local (x, y, z) respectivement lié à chaque point représentatif sélectionné d'une surface d'instance ou de modèle d'objet. Cette transposition comporte une translation tridimensionnelle, une rotation tridimensionnelle et optionnellement un changement d'échelle, étant sous-entendu que chacune de ces transformations peut être l'identité. Elle peut se faire de façon connue en soi à l'aide d'une matrice de passage. La détermination d'un repère local (x, y, z) pour chaque point représentatif sélectionné est un problème bien connu dont la résolution est également connue et ne fait pas l'objet de la présente invention. Selon l'exemple simplifié de la figure 4, un point représentatif quelconque de la surface 70 d'un modèle ou d'une instance d'objet est un point O de cette surface 70 et le descripteur est transposé dans le plan (O, x, y) localement tangent à la surface 70 au point O, sachant que l'axe (O, x) est par exemple orienté dans le sens de la plus forte pente et que l'axe (O, z) normal au plan (O, x, y) est par exemple orienté vers l'extérieur de l'instance d'objet délimitée par la surface 70. Le rayon r = OA = OB = OC = OD = OE = OF du cercle circonscrit à l'hexagone transposé ABCDEF dont le centre est en O peut être constant ou adapté à un paramètre de courbure locale de la surface 70 en O. En particulier ce rayon r peut être proportionnel au rayon de courbure local de l'axe (O, x) selon un coefficient de proportionnalité prédéfini. Le placement des points de l'hexagone ABCDEF dans le plan (O, x, y) peut être défini de façon déterministe en plaçant le point A aux coordonnées (r, 0) et en tournant dans le sens trigonométrique pour placer les autres points.

Selon un troisième principe général, les valeurs identifiantes que prend le descripteur lorsqu'il est transposé dans le repère local lié au point O résultent d'une estimation d'au moins une valeur de distance la plus proche entre chaque point du descripteur transposé dans le repère local du point O et la surface 70. Selon l'exemple simplifié de la figure 4, le descripteur transposé dans le repère local (O, x, y, z) du point O prend six valeurs identifiantes DA, DB, DC, DD, DE, DF respectivement représentatives des distances les plus proches entre les points A, B, C, D, E, F et la surface 70. On notera que le centre O de l'hexagone ABCDEF, qui pourrait être considéré comme un point du descripteur, n'est en fait pas significatif puisque sa distance la plus proche à la surface 70 est par définition nulle quelle que soit la façon dont on estime cette distance. Il n'a donc pas besoin d'être stocké. On peut aussi le considérer comme une mesure « gratuite » valant toujours 0.

Le calcul d'une valeur de distance la plus proche à partir de l'un quelconque des points du descripteur transposé peut comporter le calcul d'une distance point à point, celui d'une distance point à plan, ou les deux en les combinant par exemple. Dans une représentation en nuage de points de la surface 70, la distance point à point est la distance euclidienne entre le point considéré X = A, B, C, D, E ou F du descripteur et le point du nuage de points représentatif de la courbe 70 qui est le plus proche de X. La distance point à plan est quant à elle la distance entre, d'une part, la projection orthogonale du point X sur la normale à la surface 70 au point du nuage de points représentatif de la courbe 70 qui est le plus proche de X et, d'autre part, ce point du nuage de points qui est le plus proche de X. Il peut en outre être attribué un signe - à la valeur de distance calculée si le point du nuage de points qui est le plus proche de X est sous le plan (O, x, y) dans le repère local (O, x, y, z) et un signe + dans le cas contraire. La valeur de distance obtenue peut enfin être normalisée par r pour être ramenée dans l'intervalle [-1 ; 1] puisque c'est la valeur maximale qu'une distance point à point ou point à plan peut prendre dans ce contexte.

La recherche du point de la surface 70 qui est le plus proche d'un point considéré du descripteur transposé est adaptée à une structure de recherche rapide telle qu'un arbre k-d, que ce soit une distance point à point ou point à plan. Elle est en outre avantageusement indépendante de la taille du descripteur, c'est-à-dire de l'échelle de description. L'adaptation d'un algorithme tel que l'un de ceux enseignés dans l'article de Muja et al, intitulé « Scalable nearest neighbor algorithms for high dimensional data », publié dans IEEE Transactions on Pattern Analysis and Machine Intelligence, vol. 36, n° 11, pages 2227 à 2240 (novembre 2014), peut convenir.

A partir de cette recherche simple, le calcul d'une distance point à point ou point à plan est également très simple et nettement plus pertinent que celui d'une valeur d'élévation par exemple. Ainsi, le calcul d'une distance point à point rend visibles les bords d'une surface tout en étant un peu trop sensible à l'échantillonnage de la surface. Inversement, le calcul d'une distance point à plan est particulièrement robuste aux irrégularités d'échantillonnage mais rend moins visibles les bords de la surface. Il est également plus robuste à l'approximation de plus proche voisin introduite par l'utilisation d'une structure de recherche rapide. Quant au calcul d'élévation qui n'est pas retenu dans la présente invention, il présente les deux défauts précités (sensibilité à l'échantillonnage et difficulté à rendre visible les bords de surface).

Une combinaison des deux distances précitées permet de tirer le meilleur profit des avantages correspondants. On peut ainsi optionnellement calculer sans complexité particulière, pour chaque point du descripteur transposé en un point représentatif sélectionné, les deux valeurs de distance point à point et point à plan, puis déterminer laquelle est préférable. Ce choix peut être fait automatiquement en comparant les deux valeurs multivaluées obtenues avec les deux distances pour le descripteur, puis, si la différence entre elles dépasse un certain seuil, en retenant la valeur de distance point à point permettant une meilleure gestion des bords de surface, sans perdre en robustesse sur l'échantillonnage du reste de la surface en retenant la valeur de distance point à plan si cette différence reste inférieure au seuil.

En variante, le principe général d'estimation d'au moins une valeur de distance la plus proche entre chaque point du descripteur transposé dans le repère local déterminé du point représentatif sélectionné et la surface 70 de l'instance d'objet peut être implémenté sous la forme d'une estimation de plusieurs valeurs de distances entre chaque point du descripteur et respectivement plusieurs points les plus proches situés sur la surface 70 de l'instance d'objet. Une valeur statistique (moyenne, médiane, ...) peut ensuite être retenue sur cette base pour estimer la distance la plus proche entre chaque point du descripteur et la surface 70 de l'instance d'objet. Cette option améliore la robustesse du descripteur, mais au prix d'une complexité accrue. Cela dit, cette complexité est indépendante de l'échelle du descripteur et n'a pas d'impact sur les autres fonctions telles que la comparaison de valeurs du descripteur, ou tout autre calcul basé sur ces valeurs.

En variante également, en plus de la ou des distance(s) entre un point du descripteur et le ou les point(s) de la surface d'instance d'objet le(s) plus proche(s), peuvent être calculées les distances entre ce point du descripteur et les points de la surface d'instance d'objet situés dans un ou des voisinage(s) prédéterminé(s) du ou des point(s) de la surface d'instance d'objet le(s) plus proche(s). De même, une valeur statistique (moyenne, médiane, ...) peut ensuite être retenue sur cette base pour estimer la distance la plus proche entre chaque point du descripteur et la surface 70 de l'instance d'objet, toujours en préservant l'indépendance de la complexité à l'échelle du descripteur.

Dans un autre mode de réalisation que celui illustré par l'exemple de la figure 4, un descripteur conforme aux trois principes généraux précités peut être défini de façon globale.

Par une adaptation du premier principe général, l'ensemble des points du descripteur forme un polygone, notamment un hexagone, par exemple destiné à s'étendre au-delà de la surface 70 de l'instance d'objet qu'il doit identifier.

Par une adaptation du deuxième principe général, chaque point représentatif sélectionné est un point d'un axe ou d'une courbe principal(e) de l'instance d'objet, notamment un axe ou une courbe s'étendant à l'intérieur de la surface 70 de l'instance d'objet. Pour chaque point représentatif sélectionné, le descripteur est alors transposé dans le plan localement normal à l'axe ou à la courbe principal(e) de l'instance d'objet et comportant ce point représentatif. Le polygone qu'il forme est dimensionné pour entourer la surface 70 de l'instance d'objet définissant ainsi un descripteur global de l'instance d'objet. Ce dimensionnement peut être constant. La description de l'objet est de la sorte comparable à une identification par scanner. En variante de cet autre mode de réalisation, tous les points du polygone n'ont pas besoin d'être à l'extérieur de l'instance d'objet : des points à l'intérieur peuvent se traduire par une distance négative par exemple.

Le troisième principe général peut être adapté de la même façon pour ce descripteur global que pour le descripteur local de la figure 4.

Dans tous les cas, le descripteur est finalement formé d'une fonction vectorielle des valeurs de distances les plus proches calculées. Au plus simple, chaque composante vectorielle du descripteur correspond respectivement à une valeur de distance la plus proche calculée pour l'un des points du descripteur. Dans ce cas, les valeurs identifiantes du descripteur coïncident avec les valeurs de distances en chacun de ses points. Mais de façon plus élaborée, un traitement des valeurs de distances peut suivre leur calcul avant leur distribution dans les composantes vectorielles du descripteur. Ainsi par exemple, elles peuvent être classées par ordre croissant ou décroissant avant d'être distribuées pour obtenir un descripteur ordonné. La fonction vectorielle peut aussi en variante résulter d'une combinaison plus complexe des valeurs de distances calculées, notamment par des calculs de moyenne ou de moments statistiques des valeurs de distances, les résultats de ces calculs, et non plus les valeurs de distances, formant alors les valeurs identifiantes du descripteur.

On notera qu'un descripteur tel que l'un de ceux décrits précédemment peut en outre être défini par des paramètres autres que l'ensemble de points précités : par exemple un paramètre de luminance, de chrominance, de rugosité de polarité, de texture, de pouvoir réfléchissant, etc, à condition que les données d'entrée (i.e. les données de représentation de scène tridimensionnelle) comportent de telles informations de luminance, de chrominance, de rugosité de polarité, de texture, de pouvoir réfléchissant, etc. Chacun de ces paramètres peut être estimé en chaque point représentatif sélectionné auquel s'applique le descripteur, en chaque point transposé du descripteur, ou dans un voisinage de ces points. Par exemple, en ce qui concerne la chrominance, elle peut présenter une, deux ou trois dimensions si elle est mesurée aux points représentatifs sélectionnés ou dans un voisinage de ceux-ci. Elle peut présenter six, douze ou dix-huit dimensions si elle est définie en tant que variation relative de chrominance entre chaque point transposé du descripteur et les points représentatifs sélectionnés. On notera que le fait de décrire des variations relatives pour chaque point du descripteur permet de s'affranchir au moins en partie des effets liés à l'illumination de la scène et aux propriétés spéculaires de certains objets. L'ajout de paramètres implique une augmentation de la complexité du descripteur, non seulement pour le calcul et les comparaisons de ses valeurs identifiantes, mais également pour la sollicitation en mémoire. Il convient donc de bien mesurer la pertinence de chaque paramètre ajouté en fonction de l'application visée. Par exemple, l'utilisation du paramètre de chrominance peut dans certains cas améliorer le descripteur, notamment pour distinguer des objets de même forme mais possédant des couleurs ou des motifs colorés différents, mais peut aussi le dégrader, notamment quand l'objet à décrire est métallique et/ou brillant auquel cas c'est le paramètre de luminance qui devient plus pertinent. En cas de propriétés spéculaires marquées et visibles, la luminance peut elle aussi dégrader le descripteur, seules les informations de tridimensionnalité restant fiables.

Un descripteur tel que l'un de ceux décrits précédemment peut en outre être associé à un paramètre de confiance défini de telle sorte qu'il permette un calcul de score de confiance en chaque point représentatif sélectionné, ce calcul de score de confiance étant fonction de la pluralité de valeurs identifiantes que prend le descripteur en chaque point représentatif sélectionné. Lorsque l'on souhaite décrire au moins deux modèles différents, les valeurs identifiantes que prend le descripteur pour chaque modèle sont calculées indépendamment mais leurs scores de confiance peuvent être calculés de manière combinée. Ainsi, les valeurs identifiantes les plus discriminantes par rapport à l'ensemble des modèles peuvent être trouvées. Cela permet d'éliminer de la description les parties semblables de modèles différents.

En version simplifiée ou par défaut, le score de confiance peut être une constante (i.e. pas de gestion de scores de confiance) ou un nombre aléatoire (i.e. gestion aléatoire de scores de confiance).

Selon une version définissant la confiance en fonction de la courbure locale de la surface 70 d'instance d'objet, le score de confiance peut être la somme des carrés des valeurs identifiantes prises par les points du descripteur, c'est-à-dire $DA^2 + DB^2 + DC^2 + DD^2 + DE^2 + DF^2$ pour l'exemple de la figure 4 (i.e. exploitation des arêtes internes du polygone), ou la somme des carrés des différences de valeurs identifiantes entre sommets des côtés du polygone formé par le descripteur, c'est-à-dire $(DA-DB)^2 + (DB-DC)^2 + (DC-DD)^2 + (DD-DE)^2 + (DE-DF)^2 + (DF-DA)^2$ pour l'exemple de la figure 4 (i.e. exploitation des arêtes externes du polygone), ou encore la somme totale des deux sommes précédentes pour exploiter pleinement toutes les arêtes internes et externes du polygone formé par le descripteur. Cette version fait à juste titre l'hypothèse qu'une valeur du descripteur calculée en un point représentatif sélectionné sur une zone de faible courbure de la surface d'instance d'objet est moins discriminante qu'une valeur calculée sur une zone de variation de courbure plus importante. A la limite, si la zone est plane, le score de confiance résultant est nul, ce qui confirme qu'une surface plane d'instance d'objet n'est pas une zone permettant une identification de cet objet.

Selon une version plus élaborée définissant la confiance en fonction d'une singularité des valeurs identifiantes prises par le descripteur, le score de confiance peut être défini comme la somme de valeurs prises par une fonction de distances, calculées dans l'espace multidimensionnel des valeurs possibles du descripteur, de valeurs identifiantes situées dans un voisinage prédéterminé d'une valeur identifiante considérée. La fonction de distances est alors avantageusement choisie de façon astucieuse pour pénaliser la valeur identifiante considérée s'il y a beaucoup d'autres valeurs identifiantes dans son voisinage et si d'une façon générale les valeurs identifiantes sont proches les unes des autres dans l'espace des valeurs possibles du descripteur. Elle est par exemple définie de la façon suivante :

[Math. 1]

$$f(d) = \frac{1}{1 + d^2},$$

où d est la distance, dans l'espace multidimensionnel des valeurs possibles du descripteur, entre la valeur identifiante considérée et une autre valeur identifiante prise par le descripteur dans son voisinage prédéterminé.

En notant N le nombre d'autres valeurs identifiantes prises par le descripteur dans le voisinage prédéterminé de la valeur identifiante considérée, le score de confiance prend alors la forme suivante :

[Math. 2]

$$\sum_{i=1}^{N} f(d_i) = \sum_{i=1}^{N} \frac{1}{1 + d_i^2},$$

où $d_i$ est la distance entre la valeur identifiante considérée et la i-ème autre valeur identifiante prise par le descripteur dans son voisinage prédéterminé.

Cette version plus élaborée du calcul de score de confiance est aussi plus coûteuse en temps de calcul, même si les méthodes de recherche rapide s'appliquent aussi pour une recherche des plus proches voisins dans l'espace des valeurs possibles du descripteur. Mais elle est tout particulièrement bien adaptée par construction à chaque instance d'objet décrite.

Un procédé de détection et de localisation tridimensionnelle d'au moins une instance d'au moins un objet dans des données de représentation d'une scène tridimensionnelle, par comparaison avec au moins un modèle dudit au moins un objet, mis en œuvre par le système 40 de la figure 3, par exemple à l'aide de l'ensemble 10 de modèles de la figure 1 pour une analyse de la scène 20 de la figure 2, va maintenant être détaillé en référence à la figure 5.

Il comporte une première phase 100 mettant en œuvre un procédé d'identification d'instance ou de modèle d'objet mise en œuvre par le processeur 52 lorsqu'il exécute le premier programme 56.

Il comporte une deuxième phase 200 d'obtention de jeux de paramètres de transformation en translation, rotation et éventuellement changement d'échelle pour des mises en correspondance tridimensionnelle respectives des points particuliers sélectionnés d'instances d'objets dans la scène tridimensionnelle 20 avec leurs dispositions dans l'un des modèles de l'ensemble 10. Cette deuxième phase est mise en œuvre par le processeur 52 lorsqu'il exécute le deuxième programme 58.

Il comporte une troisième phase 300 de classification automatique pour une mise en correspondance de chaque instance d'objet identifiée dans la scène tridimensionnelle 20 avec le modèle d'objet correspondant dans l'ensemble 10 le cas échéant. Cette troisième phase est mise en œuvre par le processeur 52 lorsqu'il exécute le troisième programme 60.

Enfin, il comporte une quatrième phase 400 optionnelle de vérification de la ou des transformations déterminées par classification automatique. Cette quatrième phase est mise en œuvre par le processeur 52 lorsqu'il exécute le quatrième programme 62.

Le procédé d'identification mis en œuvre par la première phase 100 comporte une première étape 102 de sélection d'au moins un point représentatif d'une surface d'une instance d'objet dans les données de représentation d'une scène tridimensionnelle. Ces données de représentation sont tout d'abord par exemple converties en un nuage tridimensionnel de points situés sur la surface de l'instance d'objet considérée. La sélection consiste à retenir au moins une partie des points de la surface. A défaut de réelle sélection, tous les points de la surface d'objet peuvent être retenus en tant que points représentatifs sélectionnés.

La première phase d'identification 100 comporte une deuxième étape 104 de détermination d'un repère local tridimensionnel en chaque point représentatif sélectionné pour une instance d'objet. Comme indiqué précédemment, il existe des méthodes connues pour définir de façon déterministe et automatique un tel repère local.

La première phase d'identification 100 comporte une troisième étape 106 de transposition de l'ensemble de points du descripteur dans le repère local déterminé pour chaque point représentatif sélectionné, par exemple à l'aide d'une matrice de passage pour une translation tridimensionnelle, une rotation tridimensionnelle ainsi qu'un changement d'échelle éventuel.

Enfin, la première phase d'identification 100 comporte une quatrième étape 108 de calcul des valeurs identifiantes prises par le descripteur dans le repère local déterminé pour chaque point représentatif sélectionné. Comme détaillé précédemment, ce calcul comporte, pour chaque point représentatif sélectionné et chaque point du descripteur, l'estimation d'au moins une valeur de distance la plus proche entre ce point du descripteur transposé dans le repère local déterminé du point représentatif sélectionné et la surface de l'instance d'objet. Les valeurs de distances obtenues sont ensuite directement exploitées ou traitées pour former la valeur identifiante multidimensionnelle prise par le descripteur en chaque point représentatif sélectionné.

Dans l'exemple des figures 1, 2 et 3, la première étape 102 de sélection de points représentatifs, la deuxième étape 104 de détermination des repères locaux, la troisième étape 106 de transposition du descripteur dans les repères locaux et la quatrième étape 108 de calcul de ses valeurs après transposition sont exécutées pour chaque instance d'objet 22, 24, 26, 28, 30, 32 de la scène tridimensionnelle 20 et pour chaque modèle d'objet 12, 14, 16 de l'ensemble 10.

Les deuxième, troisième et quatrième phases 200, 300 et 400 ne font pas l'objet de la présente invention, sont par ailleurs bien connues de l'homme du métier et ne seront donc pas détaillées.

Il apparaît clairement qu'un système/procédé d'identification par descripteur tel que celui décrit précédemment, dans un contexte applicatif purement illustratif et non limitatif de détection et de localisation tridimensionnelle d'au moins une instance d'au moins un objet dans des données de représentation d'une scène tridimensionnelle, permet une identification surfacique simple, rapide, discriminante et robuste à l'aide d'un descripteur pouvant présenter un nombre limité de dimensions, notamment six dimensions pour la variante simple d'un descripteur hexagonal tel que celui de la figure 4. En admettant par exemple que dans cette variante simple les six dimensions du descripteur soient chacune exprimées en dix valeurs distinctes possibles, alors il existe un million de valeurs distinctes possibles pour le descripteur. Il est ainsi théoriquement possible de décrire jusqu'à un million de points représentatifs avec ce descripteur sans rencontrer deux valeurs de descripteur identiques. En pratique, les nuages de points sur lesquels un procédé d'identification par descripteur opère dépassent rarement quelques centaines de milliers de points. De plus, certaines surfaces telles que les plans sont ambigües par nature de sorte que les descripteurs locaux de telles surfaces prennent nécessairement des valeurs ambigües, quel que soit le nombre de dimensions du descripteur. En d'autres termes, six dimensions pour un descripteur selon la présente invention s'avèrent le plus souvent largement suffisantes. Il en résulte un descripteur compact formant un compromis optimal entre rapidité et précision, lié au fait que ce descripteur soit surfacique.

Comme indiqué précédemment, ce descripteur est en outre parfaitement adapté à une comparaison de ses valeurs par calculs de distances euclidiennes et aux méthodes de recherches rapides connues, notamment grâce à l'homogénéité de ses dimensions principales.

Ainsi, il est possible d'effectuer à l'aide du descripteur proposé des opérations auparavant jugées trop coûteuses ou des tâches auparavant effectuées par d'autres approches. En particulier, l'étape de sélection 102 précitée peut être réduite à sa plus simple expression en retenant tous les points du nuage de points d'une surface d'instance d'objet à identifier, le calcul des valeurs prises par le descripteur proposé en chacun de ces points étant simple et rapide. Cela permet notamment de décrire des instances d'objets dont seule une petite partie est vue par un capteur. Compte tenu en outre de sa capacité de discrimination, le descripteur peut luimême servir pour une sélection ultérieure des points représentatifs d'intérêt de chaque instance d'objet à identifier en ne retenant que les points pour lesquels le descripteur transposé présente une valeur relativement éloignée des autres. Une telle sélection est optimale puisqu'elle utilise le même descripteur que celui qui sert à identifier les instances d'objets. Il y a en effet synergie entre la sélection et l'identification.

Les distances les plus proches calculées pour ce descripteur correspondent par ailleurs à une réalité physique des surfaces locales sur lesquelles elles s'appliquent. De plus elles sont parfaitement adaptées aux structures connues de recherche rapides et la complexité de calcul des valeurs de distances (et par conséquent des valeurs identifiantes du descripteur) n'augmente pas avec l'échelle de description choisie, ce qui permet d'envisager un tel descripteur à n'importe quelle échelle contrairement aux descripteurs de l'état de l'art. Enfin, dans une version simplifiée du descripteur, elles sont homogènes et rendent les comparaisons de valeurs du descripteur directement pertinentes et interprétables sans nécessité d'apporter des pondérations ou ajustements entre dimensions pour les rendre compatibles entre elles.

Le fait que le descripteur proposé soit surfacique est également cohérent avec le fait que les capteurs 3D actuels ne voient généralement que des surfaces et le fait que les représentations de modèles en conception assistée par ordinateur sont elles aussi surfaciques.

Enfin, le descripteur proposé constitue accessoirement un bon détecteur de planéité et de courbure, permettant par exemple de détecter de manière fiable et robustes les portions de surfaces planes sans surcoût en calcul.

On notera par ailleurs que l'invention n'est pas limitée aux modes de réalisations décrits précédemment.

Il a ainsi été détaillé un exemple dans lequel le descripteur est défini par un ensemble de six points formant un hexagone régulier. C'est en effet une solution simple pour disposer de points équidistants entre eux et par rapport à un centre. Mais on pourrait également choisir une figure géométrique plus complexe, avec des points à différentes distances du centre permettant ainsi de décrire plusieurs échelles de la scène tridimensionnelle.

Il a également été détaillé un exemple dans lequel des instances d'objets sont identifiées et localisées dans une scène tridimensionnelle par recalage sur un ensemble de modèles d'objets, notamment pour une application de dévracage. Mais la présente invention s'applique dans de nombreuses autres applications impliquant une identification d'instances d'objets par l'utilisation de descripteurs locaux ou globaux, sans nécessairement inclure le recalage de ces instances sur des modèles, sans même nécessairement impliquer de détection ou localisation d'objet.

## Revendications

1. Procédé (100) d'identification d'une instance d'un objet dans des données de représentation d'une scène tridimensionnelle à l'aide d'un descripteur, comportant les étapes suivantes :

   - sélection (102) d'au moins un point représentatif (O) d'une surface (70) de l'instance d'objet dans les données de représentation ;
   - détermination (104) d'un repère local (O, x, y, z) en chaque point représentatif sélectionné ;
   - calcul (108) d'une pluralité de valeurs identifiantes prises par le descripteur dans le repère local déterminé pour chaque point représentatif sélectionné ;

   **caractérisé en ce que** :

   - le descripteur est défini au moins en partie par un ensemble de points aux coordonnées prédéterminées dans un repère tridimensionnel propre au descripteur, c'est-à-dire défini pour le descripteur indépendamment de chaque repère local déterminé mais de sorte que ces coordonnées prédéterminées soient transposables dans chaque repère local déterminé par un changement de repère réalisant une transposition du repère propre au descripteur vers chaque repère local déterminé ; et
   - le calcul (108) de la pluralité de valeurs identifiantes comporte, pour chaque point représentatif sélectionné et chaque point du descripteur, l'estimation d'au moins une valeur de distance la plus proche (DA, DB, DC, DD, DE, DF) entre ce point du descripteur transposé (A, B, C, D, E, F) dans le repère local déterminé du point représentatif sélectionné et la surface (70) de l'instance d'objet.

2. Procédé d'identification (100) selon la revendication 1, dans lequel :

   - chaque point représentatif sélectionné (O) est un point de la surface (70) de l'instance d'objet ;
   - l'ensemble des points du descripteur forme un polygone, par exemple un hexagone ; et
   - pour chaque point représentatif sélectionné (O), le polygone est transposé dans un plan (O, x, y) localement tangent à la surface (70) de l'instance d'objet au point représentatif sélectionné (O).

3. Procédé d'identification (100) selon la revendication 2, dans lequel l'ensemble des points du descripteur forme un polygone régulier transposable avec une adaptation possible du rayon (r) de son cercle circonscrit à un paramètre de courbure locale de la surface (70) de l'instance d'objet en chaque point représentatif sélectionné (O).

4. Procédé d'identification (100) selon la revendication 1, dans lequel :

   - chaque point représentatif sélectionné est un point d'un axe ou d'une courbe principal(e) de l'instance d'objet ;
   - l'ensemble des points du descripteur forme un polygone, par exemple un hexagone ; et
   - pour chaque point représentatif sélectionné, le polygone est transposé dans un plan localement normal à l'axe ou à la courbe principal(e) de l'instance d'objet et comportant le point représentatif sélectionné.

5. Procédé d'identification (100) selon l'une quelconque des revendications 1 à 4, dans lequel ladite au moins une valeur de distance la plus proche (DA, DB, DC, DD, DE, DF) estimée est une valeur de distance point à point, une valeur de distance point à plan ou une combinaison de ces valeurs de distances.

6. Procédé d'identification (100) selon l'une quelconque des revendications 1 à 5, dans lequel la transposition de l'ensemble de points du descripteur comporte une translation tridimensionnelle, une rotation tridimensionnelle ainsi qu'un changement d'échelle.

7. Procédé d'identification (100) selon l'une quelconque des revendications 1 à 6, dans lequel le calcul (108) de la pluralité de valeurs identifiantes comporte en outre un calcul de score de confiance du descripteur en chaque point représentatif sélectionné (O), ce calcul de score de confiance étant fonction de la pluralité de valeurs identifiantes.

8. Procédé d'identification (100) selon l'une quelconque des revendications 1 à 7, dans lequel le descripteur est en outre défini par au moins l'un des éléments de l'ensemble constitué de :

   - un paramètre de luminance ;
   - un paramètre de chrominance ;
   - un paramètre de rugosité ;
   - un paramètre de polarité ;
   - un paramètre de texture ; et
   - un paramètre de pouvoir réfléchissant.

9. Programme d'ordinateur (56) téléchargeable depuis un réseau de communication et/ou enregistré sur un support (54) lisible par ordinateur et/ou exécutable par un processeur (52), **caractérisé en ce qu'**il comprend des instructions pour l'exécution des étapes d'un procédé d'identification (100) selon l'une quelconque des revendications 1 à 8, lorsque ledit programme est exécuté sur un ordinateur.

10. Système (44, 52, 56) d'identification d'une instance d'un objet dans des données de représentation d'une scène tridimensionnelle à l'aide d'un descripteur, le système comportant :

   - au moins une mémoire (44) de stockage des données (46, 48) de représentation de la scène tridimensionnelle et de coordonnées prédéterminées (50) de l'ensemble de points du descripteur ; et
   - un processeur (52) d'identification de l'instance d'objet dans la scène tridimensionnelle, programmé pour l'exécution des étapes d'un procédé d'identification (100) selon l'une quelconque des revendications 1 à 8.

**Patentansprüche**

1. Verfahren (100) zur Identifizierung einer Instanz eines Objekts in Daten zur Darstellung einer dreidimensionalen Szene mithilfe eines Deskriptors, das die folgenden Schritte aufweist:

   - Auswählen (102) mindestens eines repräsentativen Punkts (O) einer Oberfläche (70) der Objektinstanz in den Darstellungsdaten;
   - Bestimmen (104) eines lokalen Koordinatensystems (O, x, y, z) an jedem ausgewählten repräsentativen Punkt;
   - Berechnen (108) einer Vielzahl von Identifikationswerten, die der Deskriptor in dem für jeden ausgewählten repräsentativen Punkt bestimmten lokalen Koordinatensystem annimmt,

   **dadurch gekennzeichnet, dass**:

   - der Deskriptor mindestens teilweise durch eine Gesamtheit von Punkten mit vorbestimmten Koordinaten in einem für den Deskriptor spezifischen dreidimensionalen Koordinatensystem definiert ist, das heißt für den Deskriptor unabhängig von jedem bestimmten lokalen Koordinatensystem definiert ist, aber so, dass diese vorbestimmten Koordinaten in jedes bestimmte lokale Koordinatensystem durch einen Wechsel des Koordinatensystems transponierbar sind, der eine Transposition des für den Deskriptor spezifischen Koordinatensystems zu jedem bestimmten lokalen Koordinatensystem durchführt; und
   - die Berechnung (108) der Vielzahl von Identifikationswerten für jeden ausgewählten repräsentativen Punkt und jeden Punkt des Deskriptors die Schätzung von mindestens einem nächstgelegenen Distanzwert (DA, DB, DC, DD, DE, DF) zwischen diesem in das bestimmte lokale Koordinatensystem des ausgewählten repräsentativen Punkts transponierten Punkt des Deskriptors (A, B, C, D, E, F) und der Oberfläche (70) der Objektinstanz aufweist.

2. Identifikationsverfahren (100) nach Anspruch 1, wobei:

   - jeder ausgewählte repräsentative Punkt (O) ein Punkt der Oberfläche (70) der Objektinstanz ist;
   - die Gesamtheit der Punkte des Deskriptors ein Polygon, beispielsweise ein Sechseck, bildet; und
   - das Polygon für jeden ausgewählten repräsentativen Punkt (O) in eine Ebene (O, x, y) transponiert wird, die am ausgewählten repräsentativen Punkt (O) lokal tangential zu der Oberfläche (70) der Objektinstanz ist.

3. Identifikationsverfahren (100) nach Anspruch 2, wobei die Gesamtheit der Punkte des Deskriptors ein regelmäßiges Polygon bildet, das mit einer möglichen Anpassung des Radius (r) seines Umkreises an einen lokalen Krümmungsparameter der Oberfläche (70) der Objektinstanz an jeden ausgewählten repräsentativen Punkt (O) transponierbar ist.

4. Identifikationsverfahren (100) nach Anspruch 1, wobei:

   - jeder ausgewählte repräsentative Punkt ein Punkt einer Hauptachse oder einer Hauptkrümmung der Objektinstanz ist;
   - die Gesamtheit der Punkte des Deskriptors ein Polygon, beispielsweise ein Sechseck, bildet; und
   - das Polygon für jeden ausgewählten repräsentativen Punkt in eine Ebene transponiert wird, die lokal senkrecht zu der Hauptachse oder zu der Hauptkrümmung der Objektinstanz steht und den ausgewählten repräsentativen Punkt aufweist.

5. Identifikationsverfahren (100) nach einem der Ansprüche 1 bis 4, wobei der mindestens eine geschätzte nächstgelegene Distanzwert (DA, DB, DC, DD, DE, DF) ein Punkt-zu-Punkt-Distanzwert, ein Punkt-zu-Ebene-Distanzwert oder eine Kombination dieser Distanzwerte ist.

**6.** Identifikationsverfahren (100) nach einem der Ansprüche 1 bis 5, wobei die Transposition der Gesamtheit der Punkte des Deskriptors eine dreidimensionale Translation, eine dreidimensionale Rotation sowie eine Skalierung aufweist.

**7.** Identifikationsverfahren (100) nach einem der Ansprüche 1 bis 6, wobei die Berechnung (108) der Vielzahl von Identifikationswerten ferner eine Berechnung des Konfidenzwerts des Deskriptors an jedem ausgewählten repräsentativen Punkt (O) aufweist, wobei diese Konfidenzwertberechnung von der Vielzahl von Identifikationswerten abhängt.

**8.** Identifikationsverfahren (100) nach einem der Ansprüche 1 bis 7, wobei der Deskriptor ferner durch mindestens eines der Elemente der Gesamtheit definiert ist, die besteht aus:

- einem Leuchtdichteparameter;
- einem Chrominanzparameter;
- einem Rauheitsparameter;
- einem Polaritätsparameter;
- einem Texturparameter; und
- einem Parameter der Reflexionsfähigkeit.

**9.** Computerprogramm (56), das von einem Kommunikationsnetzwerk herunterladbar und/oder auf einem computerlesbaren Medium (54) gespeichert und/oder von einem Prozessor (52) ausführbar ist, **dadurch gekennzeichnet, dass** es Befehle zur Ausführung der Schritte eines Identifikationsverfahrens (100) nach einem der Ansprüche 1 bis 8 umfasst, wenn das Programm auf einem Computer ausgeführt wird.

**10.** System (44, 52, 56) zur Identifizierung einer Instanz eines Objekts in Daten zur Darstellung einer dreidimensionalen Szene mithilfe eines Deskriptors, wobei das System aufweist:

- mindestens einen Speicher (44) zum Speichern der Daten (46, 48) zur Darstellung der dreidimensionalen Szene und von vorbestimmten Koordinaten (50) der Gesamtheit der Punkte des Deskriptors; und
- einen Prozessor (52) zur Identifizierung der Objektinstanz in der dreidimensionalen Szene, der zur Ausführung der Schritte eines Identifikationsverfahrens (100) nach einem der Ansprüche 1 bis 8 programmiert ist.

**Claims**

**1.** A method (100) for identifying an instance of an object in data representing a three-dimensional scene using a descriptor, comprising the following steps:

- selection (102) of at least one representative point (O) of a surface (70) of the object instance in the representation data;
- determination (104) of a local coordinate system (O, x, y, z) at each selected representative point;
- computation (108) of a plurality of identifying values taken by the descriptor in the local coordinate system determined for each selected representative point;

**characterized in that**:

- the descriptor is defined at least in part by a set of points with predetermined coordinates in a three-dimensional coordinate system specific to the descriptor, that is, defined for the descriptor independently of each specific determined local coordinate system, but such that these predetermined coordinates can be transposed into each determined local coordinate system by a coordinate system transformation that maps the descriptor's own coordinate system to each determined local coordinate system; and
- the computation (108) of the plurality of identifying values involves, for each selected representative point and each point of the descriptor, estimating at least one nearest distance value (DA, DB, DC, DD, DE, DF) between that point of the descriptor transposed (A, B, C, D, E, F) into the determined local coordinate system of the selected representative point and the surface (70) of the object instance.

**2.** The identification method (100) according to claim 1, wherein:

- each selected representative point (O) is a point on the surface (70) of the object instance;
- the set of points in the descriptor forms a polygon, such as a hexagon; and
- for each selected representative point (O), the polygon is transposed onto a plane (O, x, y) that is locally tangent to the surface (70) of the object instance at the selected representative point (O).

**3.** The identification method (100) according to claim 2, wherein the set of points of the descriptor forms a transposable regular polygon, with the radius (r) of its circumscribed circle potentially adapted to a local curvature parameter of the surface (70) of the object instance at each selected representative point (O).

**4.** The identification method (100) according to claim 1, wherein:

- each selected representative point is a point on a principal axis or curve of the object instance;
- the set of points in the descriptor forms a polygon, such as a hexagon; and
- for each selected representative point, the polygon is transposed onto a plane that is locally normal to the principal axis or curve of the object instance and contains the selected representative point.

5. The identification method (100) according to any one of claims 1 to 4, wherein said at least one estimated nearest distance value (DA, DB, DC, DD, DE, DF) is a point-to-point distance value, a point-to-plane distance value, or a combination of these distance values.

6. The identification method (100) according to any one of claims 1 to 5, wherein the transposition of the descriptor's set of points includes a three-dimensional translation, a three-dimensional rotation, as well as a scaling.

7. The identification method (100) according to any one of claims 1 to 6, wherein the computation (108) of the plurality of identifying values further comprises a computation of a confidence score for the descriptor at each selected representative point (O), said confidence score computation being a function of the plurality of identifying values.

8. The identification method (100) according to any one of claims 1 to 7, wherein the descriptor is further defined by at least one element from the set consisting of:

   - a luminance parameter;
   - a chrominance parameter;
   - a roughness parameter;
   - a polarity parameter;
   - a texture parameter; and
   - a reflectivity parameter.

9. **A computer** program (56) downloadable from a communication network and/or stored on a computer-readable medium (54) and/or executable by a processor (52), **characterized in that** it comprises instructions for executing the steps of an identification method (100) according to any one of claims 1 to 8, when said program is executed on a computer.

10. A system (44, 52, 56) for identifying an instance of an object in data representing a three-dimensional scene using a descriptor, the system comprising:

    - at least one memory (44) for storing data (46, 48) representing the three-dimensional scene and predetermined coordinates (50) of the set of points in the descriptor; and
    - an object instance identification processor (52) in the three-dimensional scene, programmed to perform the steps of an identification method (100) according to any one of claims 1 to 8.

## Figure 1

14

12

16

10

## Figure 2

24

30

28

32

26

22

20

## Figure 3

54

56

58

60

62

42

52

66

64

50

48

46

44

40

## Figure 4

## Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 8830229 B2

- US 8274508 B2

### Littérature non-brevet citée dans la description

- **GUO et al.** 3D object recognition in cluttered scenes with local surface features: a survey. *publié dans IEEE Transactions on Pattern Analysis and Machine Intelligence*, November 2014, vol. 36 (11), 2270-2287

- POINT SIGNATURES: A NEW REPRESENTATION FOR 3D OBJECT RECOGNITION. **CHUA C et al.** INTERNATIONAL JOURNAL OF COMPUTER VISION. KLUWER ACADEMIC PUBLISHERS, 01 October 1997, vol. 25, 63-85

- **MUJA et al.** Scalable nearest neighbor algorithms for high dimensional data. *IEEE Transactions on Pattern Analysis and Machine Intelligence*, November 2014, vol. 36 (11), 2227-2240